# EUROPÄISCHE PATENTSCHRIFT

(11) **EP 4 368 368 B1**
(45) Veröffentlichungstag und Bekanntmachung des Hinweises auf die Patenterteilung: **14.05.2025**
(21) Anmeldenummer: 22206801.7
(22) Anmeldetag: 10.11.2022
(51) Int. Cl.: B29C 51/42, B29C 35/00, B29C 51/10, B29K 29/00

(54) **TIEFZIEHVORRICHTUNG, VERPACKUNGSMASCHINE MIT EINER TIEFZIEHVORRICHTUNG UND VERFAHREN ZUM BETRIEB DER TIEFZIEHVORRICHTUNG**
DEEP DRAWING DEVICE, PACKAGING MACHINE WITH A DEEP DRAWING DEVICE AND METHOD FOR OPERATING THE DEEP DRAWING DEVICE
DISPOSITIF D'EMBOUTISSAGE PROFOND, MACHINE D'EMBALLAGE DOTÉE D'UN DISPOSITIF D'EMBOUTISSAGE PROFOND ET PROCÉDÉ DE FONCTIONNEMENT DU DISPOSITIF D'EMBOUTISSAGE PROFOND

(43) Veröffentlichungstag der Anmeldung: 15.05.2024
(73) Patentinhaber: Harro Höfliger Verpackungsmaschinen GmbH, 71573 Allmersbach im Tal (DE)
(72) Erfinder: Luka, Jürgen, 71573 Allmersbach im Tal (DE); Schirmer, Olaf, 71573 Allmersbach im Tal (DE); Marbaz, Jens, 71573 Allmersbach im Tal (DE); Hahn, Tobias, 71573 Allmersbach im Tal (DE)
(74) Vertreter: Zurhorst, Stefan

(56) Entgegenhaltungen:
- EP-B1- 3 078 478
- US-A- 4 248 651
- US-A1- 2013 122 134

## Beschreibung

Die Erfindung betrifft eine Tiefziehvorrichtung mit den Merkmalen nach dem Oberbegriff des Anspruchs 1 und eine Verpackungsmaschine zur Herstellung von gefüllten Beuteln mit einer solchen Tiefziehvorrichtung sowie ein Verfahren zum Betrieb der Tiefziehvorrichtung.

In verbreiteter Ausführung werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Selbstverständlich muss bei der Herstellung von derartigen Verpackungseinheiten sichergestellt werden, dass die Folie der Verpackungseinheit äußeren Belastungen standhält, so dass das verpackte Produkt ausreichend geschützt ist. Wurde während des Herstellungsprozesses von Verpackungseinheiten festgestellt, dass die Folie eingerissen ist oder sich partiell derart ausgedünnt hat, dass die Folie undicht ist, wurde bisher als Gegenmaße die Folienstärke erhöht. Auch eine Anpassung der Formprozessparameter, wie beispielsweise die Vorheiztemperatur oder Vorheizdauer der Folien, kann vorgenommen werden. Dadurch können Fehlstellen in der Folienverpackung vermieden werden. Die Verwendung einer dickeren Folie kann jedoch zu einer erhöhten Umweltbelastung führen. Zudem haben die erforderlichen Anpassungen auch eine Erhöhung der Herstellungskosten zur Folge.

Ein weiterer Nachteil der aus dem Stand der Technik bekannten Verpackungsmaschinen stellt sich insbesondere bei der Verwendung von wasserlöslichen Folien ein. Wasserlösliche Folien, wie PVOH-Folien, sind aus dem Stand der Technik hinreichend bekannt und kommen insbesondere bei der Verpackung von Wasch- und Reinigungsmitteln, beispielsweise im Einsatz für Spülmaschinen oder Waschmaschinen, zum Tragen. Die Verpackungseinheiten werden in die entsprechende Maschine gelegt und mit Wasser umspült. Sobald sich die Folie auflöst, wird das Waschmittel freigesetzt. Die Verwendung einer erhöhten Folienstärke verursacht wiederum eine Erhöhung der Auflösezeit der Verpackungseinheit. Des Weiteren wurden äußerst unregelmäßige, nicht reproduzierbare Auflösezeiten der Verpackungseinheiten festgestellt.

Folglich ist es Aufgabe der Erfindung, eine Tiefziehvorrichtung anzugeben, die eine prozesssichere, umweltschonende und zugleich auch günstige Herstellung von gefüllten Folienbeuteln ermöglicht.

Diese Aufgabe wird durch eine Tiefziehvorrichtung mit den Merkmalen des Anspruchs 1 gelöst.

Eine weitere Aufgabe der Erfindung ist es, eine Verpackungsmaschine anzugeben, die eine prozesssichere, umweltschonende und zugleich auch günstige Herstellung von gefüllten Folienbeuteln ermöglicht.

Diese weitere Aufgabe wird durch eine Verpackungsmaschine mit den Merkmalen des Anspruchs 7 gelöst.

Eine weitere Aufgabe der Erfindung besteht darin, ein Verfahren zum Tiefziehen von Folie zur Herstellung von Folienverpackungen anzugeben, das eine prozesssichere, umweltschonende und zugleich auch günstige Herstellung von gefüllten Folienbeuteln ermöglicht.

Diese Aufgabe der Erfindung wird durch ein Verfahren mit den Merkmalen des Anspruchs 8 erfüllt.

Der Erfindung liegt die Erkenntnis zugrunde, dass die unregelmäßigen Auflösezeiten der wasserlöslichen Folien zumindest zu großen Teilen auf eine ungleichmäßige Folienstärke zurückzuführen ist. Ferner konnte festgestellt werden, dass die ungleichmäßige Folienstärke während des Tiefziehens der Folie entsteht. Beim Tiefziehen legt sich die Folie über die Matrizenform. Derartige Matrizenformen weisen komplexe Geometrien mit verschiedenen Tiefen und Formradien auf. Dieser Umstand führt dazu, dass die Folie nach dem Tiefziehen innerhalb der Matrizenform lokal verschieden ausgedünnt ist und damit auch lokal verschiedene Folienstärken aufweist.

Es ist bekannt, dass zur Erlangung eines verbesserten Fließverhaltens der Folie diese vor und/oder während des Tiefziehens zu erwärmen ist. Hierfür werden Heizplatten eingesetzt, die die gesamte Folie erwärmen. Um nicht nur das Fließverhalten der Folie in Gänze zu verbessern, sondern auch der partiellen Ausdünnung der Folie entgegenzuwirken, umfasst die erfindungsgemäße Tiefziehvorrichtung zum Tiefziehen von Folie eine Anordnung von mehreren Matrizenplatten, die durch einen Transporteur in einer Umlaufbahn antreibbar ist, wobei jede Matrizenplatte mindestens eine Matrizenform aufweist, und mit mindestens einer Formvakuumeinrichtung, wobei die Formvakuumeinrichtung mindestens eine erste Vakuumquelle zur Bereitstellung eines Vakuums umfasst, und wobei die mindestens eine erste Vakuumquelle über einen ersten Vakuumkanal mit der mindestens einen Matrizenform einer jeden Matrizenplatte zur Bereitstellung eines Vakuums zum Tiefziehen der Folie verbindbar ist, und mit mindestens einer Heizplatte zur Erwärmung der Folie, wobei die Heizplatte eine der Matrizenplatten abgewandte Oberseite und eine der Matrizenplatte zugewandte Unterseite aufweist, und mit einer sich von der Unterseite der Heizplatte zur Oberseite der Heizplatte erstreckende Hochrichtung, und wobei die Heizplatte an der Unterseite mindestens eine mit der Matrizenform korrespondierende Formkontur aufweist, wobei die Formkontur derart ausgebildet ist, dass ein Folienabschnitt der Folie, der zwischen der Formkontur der Heizplatte und der Matrizenform liegt, lokal verschieden erwärmbar ist.

Durch die Formkontur der Heizplatte ist es möglich, lokal an der Folie unterschiedliche Wärmeeinträge vorzusehen und damit das Fließverhalten der Folie partiell zu modifizieren. Somit kann in den Abschnitten der Folie, die einer erhöhten Ausdünnung unterliegen, der Wärmeeintrag reduziert werden, und in den Abschnitten der Folie, die einer reduzierten Ausdünnung unterliegen, der Wärmeeintrag erhöht werden. Während des Tiefziehens fließt das Folienmaterial vermehrt aus den erwärmten Abschnitten der Folie, die einen Werkstoffüberschuss aufweisen. Der Materialfluss aus den weniger erwärmten Abschnitten der Folie ist hingegen aufgrund des geringeren Wärmeeintrags reduziert. Auf diese Weise kann der Materialfluss der Folie gezielt gesteuert und die Ausdünnung homogenisiert werden. Folglich erfährt die Folie eine gleichmäßige Ausdünnung. Die Verwendung einer Folie mit erhöhter Folienstärke zur Vermeidung eines Materialversagens ist nicht mehr erforderlich. Auf diese Weise können die Verpackungseinheiten auf umweltfreundliche und kostengünstige Weise hergestellt werden. Durch die gezielte und gleichmäßige Ausdünnung der Folien beim Tiefziehen kann auch die Auflösezeit der Folien, insbesondere der PVOH-Folien, im Wasser prozesssicher und reproduzierbar eingestellt werden.

Es ist vorteilhaft vorgesehen, dass die Unterseite der Heizplatte eine ebene Basisfläche aufweist, wobei die Formkontur ausgehend von der Basisfläche in Hochrichtung zur Oberseite der Heizplatte hin eine Vertiefung bildet. Bevorzugt liegt die Basisfläche bezüglich der Hochrichtung vollständig unterhalb der Formkontur. Somit weist die Formkontur der Heizplatte einen größeren Abstand zur Folie auf als die Basisfläche der Heizplatte. Damit ist auch der Wärmeeintrag der Formkontur im Vergleich zur Basisfläche auf die Folie reduziert.

Es ist vorteilhaft vorgesehen, dass Teile der Formkontur als Freiformflächen ausgebildet sind. Die Formkontur kann als komplexe Geometrie ausgestaltet sein, so dass die Abstände innerhalb der Formkontur zur Folie lokal verschieden sind. Somit ist auch der Wärmeeintrag über die gesamte Formkontur auf den Folienabschnitt lokal verschieden. Die Formkontur weist bezogen auf die Basisfläche eine Vielzahl verschiedener Tiefen auf. Sind Teile der Formkontur als Freiflächen ausgebildet, so weisen diese ebenfalls eine Vielzahl verschiedener Tiefen in Bezug auf die Basisfläche auf. Die daraus resultierenden Abstände führen zu lokal verschiedenen Wärmeeinträgen auf die Folie und damit zu lokal verschiedenen Fließverhalten der Folie.

Ferner ist es vorgesehen, dass die Heizplatte über eine Druckplatte in Hochrichtung auf- und abbewegbar ist. Somit kann der Wärmeeintrag auf die Folie zumindest global modifiziert werden.

Besonders bevorzugt ist an der Formkontur der Heizplatte mindestens eine Kapillaröffnung ausgebildet, wobei die mindestens eine Kapillaröffnung über einen zweiten Vakuumkanal mit einer ersten Vakuumquelle und/oder einer zweiten Vakuumquelle verbunden ist. Bevorzugt ist die Kapillaröffnung als Kapillarbohrung ausgebildet. Wird ein Vakuum an der Formkontur angelegt, so wird die Folie an die Formkontur der Heizplatte angesaugt und dadurch vorgestreckt. Besonders bevorzugt sind mehrere Kapillaröffnungen in der Formkontur vorgesehen. Beim Ansaugen der Folie kommt die Folie zumindest teilweise an der Formkontur zu Anlage. Der Wärmeeintrag auf die Folie ist in den Bereichen, in denen die Folie an der Formkontur der Heizplatte zur Anlage kommt, erhöht. Daher sind in einer besonders bevorzugten Ausführung der Tiefziehvorrichtungen mehrere Kapillarbohrungen in der Formkontur vorgesehen und derart zueinander angeordnet, dass die Folie bei der Anlage eines Vakuums gezielt in den Bereichen die Formkontur kontaktiert, in denen ein erhöhtes Fließverhalten erforderlich ist. Somit kann das lokal verschiedene Erwärmen der Folie im Folienabschnitt zwischen der Matrizenform der Matrizenplatte und der Formkontur der Heizplatte begünstigt werden.

Das erfindungsgemäße Verfahren zum Tiefziehen von Folie zur Herstellung von Folienverpackungen mit einer erfindungsgemäßen Verpackungsmaschine umfasst die folgenden Schritte:
- mindestens einer Matrizenplatte wird eine Folie zugeführt,
- die Folie wird in dem Folienabschnitt zwischen der Formkontur der Heizplatte und der Matrizenform durch die Heizplatte lokal verschieden erwärmt.

Bevorzugt wird zum Erwärmen der Folie die Heizplatte in Richtung der Matrizenplatte bis zum Erreichen eines Abstandes zwischen der Matrizenplatte und der Heizplatte abgesenkt, wobei der Abstand zur Regulierung des Wärmeübertrages auf die Folie einstellbar ist. Durch die Einstellung des Abstandes zwischen der Heizplatte und der Folie kann der globale Wärmeübertrag eingestellt werden. Der Abstand zwischen der Heizplatte und der Folie ist, insbesondere auch während des Tiefziehvorganges, zeitlich veränderbar.

Es ist vorteilhaft vorgesehen, dass die Erwärmung der Folie mit einer gezielten Vorstreckung der Folie kombiniert wird. Hierzu wird insbesondere zur Vorstreckung der Folie an der Formkontur der Heizplatte ein Vakuum angelegt, wodurch die Folie von der Heizplatte angesaugt wird und sich an der Formkontur anlegt. Dies führt zum einen dazu, dass sich die Folie nach oben in Richtung der Heizplatte spannt und vorgestreckt wird. Zum anderen kontaktiert die Folie die Formkontur, insbesondere in den Bereichen der Kapillaröffnungen, wodurch die Folie an den Kontaktbereichen einer erhöhten Wärmeübertragung ausgesetzt ist. In einer besonders bevorzugten Ausführungsform der Tiefziehvorrichtung sind die Kapillarbohrungen, insbesondere derart an der Formkontur angeordnet, so dass die Wärmeübertragung durch den unmittelbaren Kontakt zwischen der Folie und der Formkontur in den Bereichen der Folie erfolgt, in denen ein erhöhter Materialfluss erfolgen soll.

Es ist vorteilhaft vorgesehen, dass die Folie, insbesondere nach einer Vorstreckung, in die Matrizenform der Matrizenplatte durch ein an der Matrizenform anliegendes Vakuum tiefgezogen wird. Wird ein Vakuum an der Matrizenform angelegt, so wird vorzugsweise zeitgleich das Vakuum in der Formkontur deaktiviert. Dies hat zur Folge, dass der auf die Folie wirkende Tiefziehkraft, die durch das an der Matrizenform anliegende Vakuum erzeugt wird, keine durch das Vakuum an der Formkontur erzeugte Kraft entgegenwirkt. Vielmehr kann es vorteilhaft vorgesehen sein, an der Formkontur einen Überdruck anzulegen, so dass die Folie zusätzlich über eine durch den Überdruck auf die Folie wirkende Druckkraft in die Matrizenform gedrückt wird. Der Überdruck ist vorzugsweise variabel einstellbar. Der Überdruck entspricht einer Blasluft.

Mehrere Ausführungsbeispiele der Erfindung sind nachfolgend anhand der Zeichnung näher beschrieben. Es zeigen:
- Fig. 1: in einer seitlichen Ausschnittsdarstellung eine erfindungsgemäß ausgeführte Verpackungsmaschine mit einem kontinuierlich umlaufend bewegten Transporteur sowie mit zyklisch mitbewegten Form-, Füll- und Siegelstationen,
- Fig. 2: in einer perspektivischen Darstellung eine Ausführung der Heizplatte mit einer Formkontur,
- Fig. 3: in einer ausschnittsweisen Schnittdarstellung die Tiefziehvorrichtung mit angehobener Heizplatte,
- Fig. 4: in einer ausschnittsweisen Schnittdarstellung die Tiefziehvorrichtung mit geschlossener Heizplatte,
- Fig. 5: in einer ausschnittsweisen Schnittdarstellung die Tiefziehvorrichtung mit angehobener Heizplatte mit Kapillaröffnungen, und
- Fig. 6: in einer ausschnittsweisen Schnittdarstellung die Tiefziehvorrichtung mit geschlossener Heizplatte mit Kapillaröffnungen,

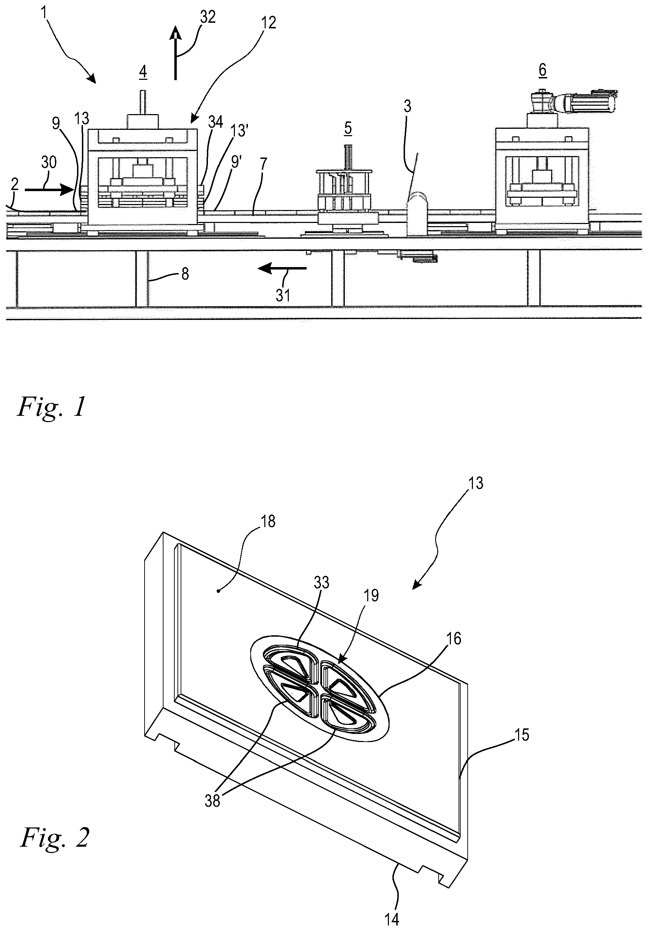

Fig. 1 zeigt in einer Seitenansicht einen Ausschnitt aus einer erfindungsgemäßen Verpackungsmaschine 1 zur Herstellung von gefüllten Beuteln. Hierzu umfasst die Verpackungsmaschine 1 ein Maschinengestell 8, eine Formstation 4, eine Füllstation 5 und eine Siegelstation 6. Eine Folie 2 wird der Verpackungsmaschine 1 zugeführt und in der Formstation 4 tiefgezogen, so dass sich in der Folie 2 Kavitäten ausbilden. Die Folie 2 ist im vorliegenden Ausführungsbeispiel als Folienbahn ausgebildet. Es kann auch zweckmäßig sein, der Verpackungsmaschine einzelne Folienblätter zuzuführen.

Die Kavitäten werden in der Füllstation 5 mit einem Produkt befüllt. Hieran anschließend wird eine Deckfolie 3 zugeführt und in der Siegelstation 6 auf die Folien 2 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folie 2 und bei der Deckfolie 3 um wasserlösliche Folien, namentlich um PVOH-Folien, zwischen denen beispielsweise ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

Die Verpackungsmaschine 1 umfasst das ortsfest montierte Maschinengestell 8 sowie einen bevorzugt kontinuierlich angetriebenen Transporteur 7. Der Transporteur 7 kann ein Förderband oder dergleichen sein und ist im bevorzugten Ausführungsbeispiel durch gelenkig und kettenartig miteinander verbundene Elemente gebildet, auf denen mehrere Matrizenplatten 9, 9' montiert sind. Letztere werden zusammen mit dem Transporteur 7 bevorzugt kontinuierlich und um das Maschinengestell 8 umlaufend angetrieben, wobei sie sich für den eigentlichen Herstellvorgang der Beutel auf einer oberen horizontalen Bahn entsprechend einem Pfeil 30 bewegen und nach entsprechender Umlenkung anschließend im unteren Bereich des Maschinengestells 8 entsprechend einem Pfeil 31 zurückgeführt werden. Ebenso bevorzugt kontinuierlich wird die Folie 2, eine bevorzugt endlose Folienbahn, zugeführt und von oben auf den Transporteur 7 mit den Matrizenplatten 9, 9' aufgelegt. Zwischen der Füllstation 5 und der Siegelstation 6 wird später noch die Deckfolie 3 bevorzugt kontinuierlich zugeführt und von oben auf die Oberseite der Folie 2 aufgelegt. Die Folie 2 und die Deckfolie 3 werden im aufgelegten Zustand entsprechend dem Pfeil 30 synchron und bevorzugt kontinuierlich mit dem Transporteur 7 mitbewegt.

Die Station zur Zufuhr der Folie 2 sowie die Station zur Zufuhr der Deckfolie 3 sind ortsfest gegenüber dem Maschinengestell 8 ausgebildet, ebenso wie nicht dargestellte Stationen für Wasserauftrag zur Unterstützung des Siegelvorgangs sowie für das Perforieren bzw. seitliche Beschneiden der Folien. Es kann auch vorgesehen sein, dass die Stationen zumindest teilweise an dem Maschinengestell 8 befestigt sind. In der bevorzugten Ausführung der Verpackungsmaschine 1 ist die Bewegung des Transporteurs 7 kontinuierlich. In einer solchen Ausführung der Verpackungsmaschine 1 arbeiten die hier durchgeführten Prozesse ebenso kontinuierlich. Um eine kontinuierliche Bewegung ausführen zu können, sind die Formstation 4, die Füllstation 5 und die Siegelstation 6 nicht ortsfest relativ zum Maschinengestell 8 positioniert, sondern werden abschnittsweise über eine bestimmte Wegstrecke synchron mit dem Transporteur 7 mitgefahren. Währenddessen erfolgt in der Formstation 4 das Tiefziehen der Folie 2, in der Füllstation 5 das Einfüllen des zu verpackenden Produkts in die tiefgezogenen Kavitäten und in der Siegelstation 6 das Aufsiegeln der Deckfolie 3 auf die untere Folie 2 im Bereich der Siegelstege der Kavität. Nach Beendigung des jeweiligen Vorganges werden die Formstation 4, die Füllstation 5 und die Siegelstation 6 zyklisch wieder zurück auf ihre Ausgangsposition verfahren, wo dann ein neuer Zyklus des jeweils ausgeführten Prozesses beginnt.

Wie in Fig. 1 gezeigt, ist die Formstation 4 durch eine Tiefziehvorrichtung 12 gebildet. Die Tiefziehvorrichtung 12 kann dazu ausgelegt sein, nur eine einzelne Matrizenplatte 9, 9' aufzunehmen und dort die Folie 2 in einem Zyklus tiefzuziehen. Im gezeigten Ausführungsbeispiel ist die Tiefziehvorrichtung 12 zur gleichzeitigen Aufnahme von mehreren, hier zwei aufeinanderfolgenden Matrizenplatten 9, 9', ausgelegt.

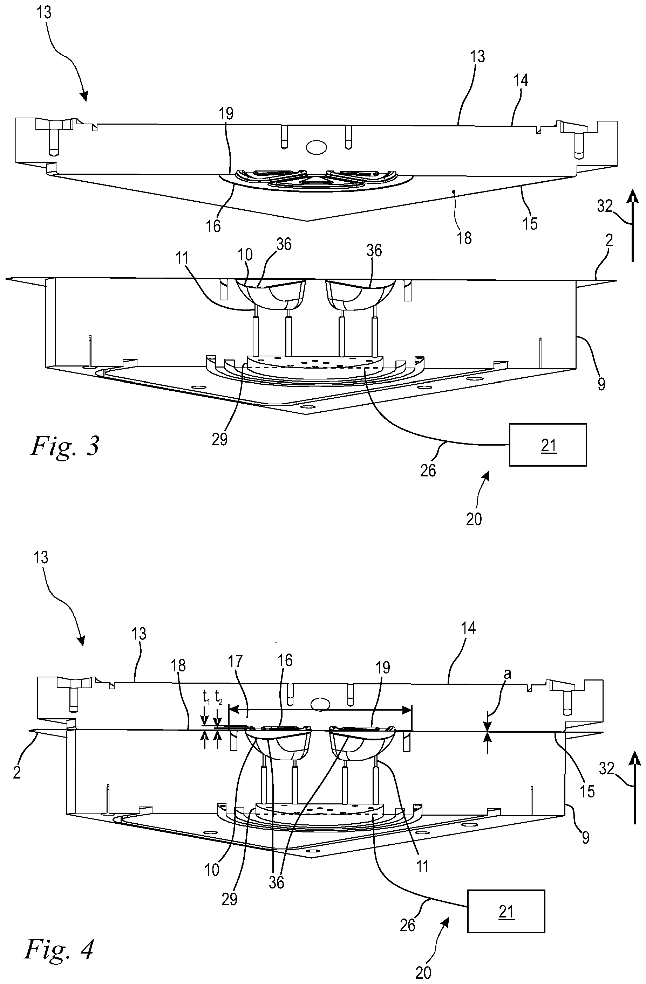

Wie in den Figuren 3 bis 6 gezeigt, weist eine einzelne Matrizenplatte 9, 9' auf ihrer Oberseite jeweils mindestens eine Matrizenform 10 auf. Es kann in einer bevorzugten Ausführungsform der Tiefziehvorrichtung 12 auch zweckmäßig sein, mehrere Matrizenformen 10 vorzusehen. Im vorliegenden, bevorzugten Ausführungsbeispiel ist eine Matrizenform 10 auf einer jeden Matrizenplatte 9 vorgesehen, wobei die Matrizenform nochmals in vier Einzelkavitäten 36 unterteilt ist. In einer besonders bevorzugten Ausführung werden auf einer einzelnen Matrizenplatte 9, 9' mit einem Prozessdurchlauf 44 oder 48 Produkte erzeugt, demnach 44 oder 48 Matrizenformen 10 auf einer Matrizenplatte 9, 9' ausgebildet sind. Jede Matrizenform 10 kann eine oder mehrere Einzelkavitäten 36 aufweisen. Jede Matrizenform 10, vorzugsweise jede Einzelkavität 36, ist mit mindestens einer Kapillarbohrung 11, vorzugsweise mehreren Kapillarbohrungen 11 versehen. Die Kapillarbohrungen 11 sind Teil eines ersten Vakuumkanals 26, über welchen die Matrizenformen 10 mit einer ersten Vakuumquelle 21 verbunden sind. Die Kapillarbohrungen 11 einer Matrizenform 10 münden in einer gemeinsamen Druckkammer 29, wodurch die Kapillarbohrungen 11 miteinander strömungsverbunden sind. Somit erfolgt über die Druckkammer 29 zwischen den einzelnen Kapillarbohrungen 11 ein Druckausgleich. Die Druckkammer 29 ist ebenfalls Teil des ersten Vakuumkanals 26. Die erste Vakuumquelle 21 erzeugt ein Vakuum, also einen Unterdruck, wobei das Vakuum der Matrizenform 10 über ein nicht näher dargestelltes Ventil, das funktional in dem ersten Vakuumkanal 26 zwischen der Vakuumquelle 21 und der Matrizenform 10 angeordnet ist, zuschaltbar ist. Mittels des Vakuums an der Matrizenform 10 wird die Folie 2 in die Matrizenform 10 tiefgezogen. Der Vakuumkanal 26 und die erste Vakuumquelle 21 sind Teile einer Formvakuumeinrichtung 20, die zur Bereitstellung eines Vakuums in den Einzelkavitäten 36 dient.

Wie in den Figuren 2 bis 6 gezeigt, umfasst die Tiefziehvorrichtung 12 eine Heizplatte 13. Die Heizplatte 13 dient zur Erwärmung der Folie 2, bevor diese tiefgezogen wird. Dadurch wird der Materialfluss der Folie begünstigt. Zum Erwärmen der Folie 2 wird die Matrizenplatte 9, 9' mit der darauf angeordneten Folie 2 unterhalb der Heizplatte 13 positioniert. Anschließend wird die Heizplatte 13 abgesenkt, bis ein Abstand a zwischen der Heizplatte 13 und der Folie 2 eingestellt ist. Je näher die Heizplatte 13 an der Folie 2 positioniert wird, desto höher ist der Wärmeübertrag auf die Folie 2. Der Abstand a kann je nach erforderlichem Fließverhalten der Folie 2 größer oder kleiner gewählt werden, wodurch der globale Wärmeübertrag von der Heizplatte 13 auf die Folie 2 eingestellt werden kann. Es kann auch zweckmäßig sein, den Abstand a null zu wählen, um einen maximalen Wärmeübertrag auf die Folie 2 zu erzielen. Die Heizplatte 13 wird über eine Druckplatte 34 in Hochrichtung 32 auf- und abbewegt.

Um den Wärmeübertrag von der Heizplatte 13 auf die Folie 2 lokal verschieden einzustellen, weist die Heizplatte 13 eine Formkontur 16 auf (Fig. 2). Die Heizplatte 13 umfasst eine der Matrizenplatte 9, 9' abgewandte Oberseite 14 und eine der Matrizenplatte 9, 9' zugewandte Unterseite 15. Die Formkontur 16 ist auf der Unterseite 15 der Heizplatte 13 ausgebildet. Während der Erwärmung der Folie 2 sind die Formkontur 16 der Heizplatte 13 und die Matrizenform 10 der Matrizenplatte 9, 9' in einer Hochrichtung 32 der Tiefziehvorrichtung 12 fluchtend zueinander ausgebildet. Die Hochrichtung 32 verläuft von der Unterseite 15 der Heizplatte 13 zur Oberseite 14 der Heizplatte 13. Die Hochrichtung 32 ist vorzugsweise der Richtung der Schwerkraft entgegengerichtet. Die Formkontur 16 ist als eine Vertiefung 19 in der Heizplatte 13 ausgebildet. Die Formkontur 16 ist hinsichtlich ihrer Geometrie derart ausgebildet, dass beim Erwärmen der Folie 2 die in Hochrichtung 32 gemessenen Abstände innerhalb der Oberfläche der Formkontur 16 zur Folie 2 verschieden sind. Dadurch ist auch der Wärmeübertrag von der Heizplatte 13 auf die Folie 2 verschieden, wodurch das Fließverhalten der Folie modifiziert werden kann. Folglich ist die Geometrie der Formkontur 16 der Matrizenform 10 dahingehend angepasst, dass das Fließverhalten der Folie 2 in einem Folienabschnitt 17, der zwischen der Formkontur 16 und der Matrizenform 10 liegt, während des Tiefziehens begünstigt wird. Die Formkontur 16 weist zu den Bereichen des Folienabschnittes 17, die während des Tiefziehens zu erhöhter Ausdünnung neigen, einen erhöhten Abstand auf. Dadurch wird der Wärmeübertrag an den entsprechenden Bereichen der Folie 2 reduziert, der Materialfluss verringert und eine erhöhte Ausdünnung vermieden. Ferner ist die Geometrie der Formkontur 16 derart ausgebildet, dass die Formkontur 16 zu den Bereichen des Folienabschnittes 17, die während des Tiefziehens zu einer zu geringen Ausdünnung neigen, einen verringerten Abstand aufweist. Dadurch wird der Wärmeübertrag an den entsprechenden Bereichen der Folie 2 erhöht, der Materialfluss vergrößert und eine zu geringe Ausdünnung vermieden.

Wie in den Figuren 2 bis 6 gezeigt, ist an der Unterseite 15 der Heizplatte 13 eine ebene Basisfläche 18 ausgebildet. Die Vertiefung 19 der Formkontur 16 erstreckt sich, ausgehend von der Basisfläche 18 in Richtung zur Oberseite 14 der Heizplatte 13. Somit ist die Basisfläche 18 bezüglich der Hochrichtung 32 vorzugsweise vollständig unterhalb der Formkontur 16 angeordnet. Teile der Formkontur 16 sind als Freiformflächen 16 ausgebildet, wodurch die Abstände zur Folie 2 sehr variabel einstellbar sind. Die Formkontur 16, insbesondere die Freiformflächen der Formkontur 16 weisen bezogen auf die Basisfläche 18 eine Vielzahl verschiedener Tiefen t₁, t₂ auf. Die Formkontur 16 wird vorzugsweise in die Heizplatte 13 eingefräst. Für jede Matrizenform 10 ist daher eine eigene an die Matrizenform 10 angepasste Formkontur 16 zu erstellen. Werden die Matrizenplatten 9, 9' einer Verpackungsmaschine 1 gewechselt, so ist auch die Heizplatte 13 der Tiefziehvorrichtung 12 auszutauschen. In einer alternativen Ausführung der Tiefziehvorrichtung 12 kann es zweckmäßig sein, eine eigene Formkonturplatte vorzusehen, die an der Heizplatte 13 befestigbar ist. In einer solchen Ausführung müsste lediglich die Formkonturplatte, nicht jedoch die gesamte Heizplatte 13 ausgetauscht werden.

Ist der Folienabschnitt 17 der Folie 2 durch die Formkontur 16 der Heizplatte 13 lokal erwärmt, kann unter Anlegen eines Vakuums in der Matrizenform 10 der Matrizenplatte 9, 9' die Folie 2 tiefgezogen werden. Durch die gezielte, lokale Erwärmung des Folienabschnittes 17 der Folie 2 weist der Folienabschnitt 17 in tiefgezogenem Zustand eine optimierte, gleichmäßige Folienstärkenverteilung auf.

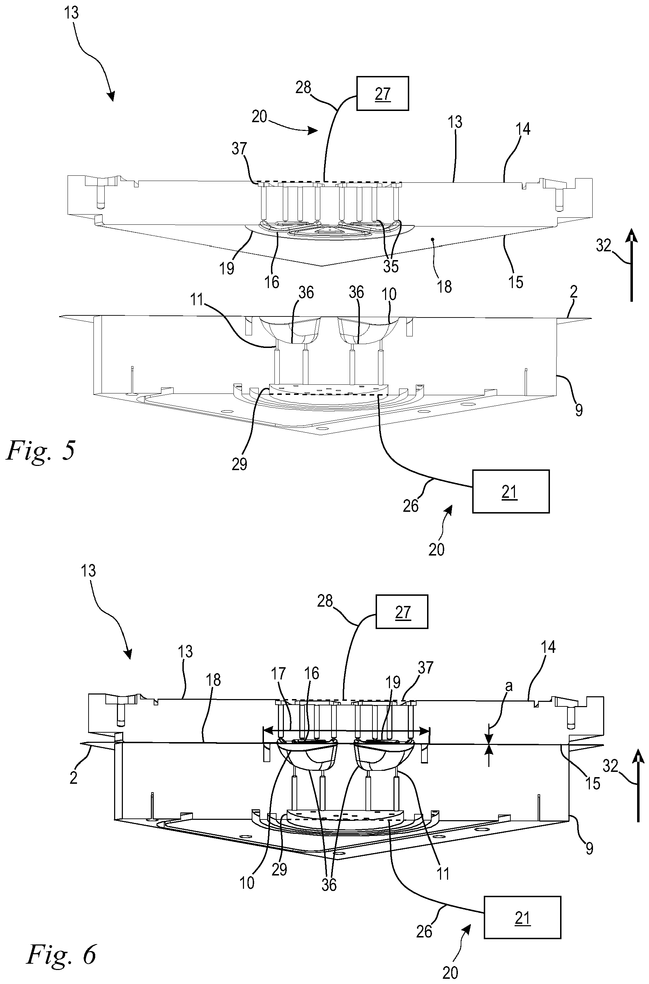

Die Figuren 5 und 6 zeigen eine besonders bevorzugte Ausführung der erfindungsgemäßen Tiefziehvorrichtung 12, die eine Vorstreckung der Folie 2 ermöglicht. Hierfür ist an der Formkontur 16 der Heizplatte 13 mindestens eine Kapillaröffnung 35 vorgesehen. Die mindestens eine Kapillaröffnung 35 ist über einen zweiten Vakuumkanal 28 mit einer zweiten Vakuumquelle 27 verbunden. Es kann alternativ auch vorgesehen sein, dass der zweite Vakuumkanal 28 mit der ersten Vakuumquelle 21 oder sowohl mit der ersten Vakuumquelle 21 als auch mit der zweiten Vakuumquelle 27 verbunden ist. Die Vakuumquellen 21, 27 sowie die entsprechenden Vakuumkanäle 26, 28 sind in allen Figuren lediglich schematisch eingezeichnet. Auch die zweite Vakuumquelle 27 und der zweite Vakuumkanal 28 sind Teil einer Formvakuumeinrichtung 20.

In der bevorzugten Ausführung der Tiefziehvorrichtung 12 nach den Figuren 5 und 6 sind an der Formkontur 16 mehrere Kapillaröffnungen 35 vorgesehen. Vorzugsweise sind in jeder Einzelkavität 36 der Formkontur 16 mindestens eine, insbesondere mehrere Kapillaröffnungen 35 vorgesehen. Die Kapillaröffnungen 35 sind bevorzugt als Bohrungen ausgebildet. Die Kapillaröffnungen 35 münden in eine zweite Druckkammer 37, über welche die Kapillaröffnungen 35 miteinander strömungsverbunden sind. Demnach erfolgt über die zweite Druckkammer 37 ein Druckausgleich zwischen den Kapillaröffnungen 35 der Formkontur 16. Die zweite Druckkammer 37 ist wie die Kapillaröffnungen 35 der Formkontur 16 Teil des zweiten Vakuumkanals 28.

Zum Vorstrecken der Folie 2 wird über die zweite und/oder erste Vakuumquelle 21, 27 ein Vakuum an der Formkontur 16 angelegt, wodurch der Folienabschnitt 17 der Folie 2 an die Formkontur 16 angesaugt wird. Die Folie 2 kommt insbesondere im Bereich der Kapillaröffnungen 35 an der Formkontur 16 zur Anlage. In diesen Bereichen kontaktiert die Folie 2 unmittelbar die Heizplatte 13, wodurch sich der Wärmeübertrag auf die Folie 2 erhöht. Vorzugsweise sind die Kapillaröffnungen 35 derart in der Formkontur 16 verteilt angeordnet, dass die Folie an den Bereichen an der Heizplatte 13 zur Anlage kommt, an denen das Fließverhalten der Folie 2 begünstigt werden soll. Selbiges gilt auch für die Vorstreckung der Folie 2. Insbesondere die Bereiche, die ein erhöhtes Fließverhalten aufweisen sollen, sind über den Unterdruck der Kapillarbohrungen 35 besonders vorzustrecken. Entsprechend sind die Kapillaröffnungen 35 über die Formkontur 16 zu verteilen.

Ist der Folienabschnitt 17 ausreichend erwärmt und vorgestreckt, wird der Unterdruck an der Formkontur 16 deaktiviert und zugleich der Unterdruck in der Matrizenform 10 eingeschaltet. Die Folie 2 wird tiefgezogen. Besonders bevorzugt kann an der Formkontur 16 auch ein Überdruck angelegt werden, um das Tiefziehen der Folie 2 zu begünstigen. Der Überdruck ist vorzugsweise variabel einstellbar. Der Überdruck entspricht einer Blasluft. Anschließend wird der Tiefziehvorrichtung 12 eine neue Matrizenplatte 9, 9' zugeordnet und der Tiefziehvorgang wird erneut wiederholt.

## Patentansprüche

1. Tiefziehvorrichtung zum Tiefziehen von Folie,
umfassend eine Anordnung von mehreren Matrizenplatten (9, 9'), die durch einen Transporteur (7) in einer Umlaufbahn antreibbar ist,
wobei jede Matrizenplatte (9, 9') mindestens eine Matrizenform (10) aufweist, und mit mindestens einer Formvakuumeinrichtung (20), wobei die Formvakuumeinrichtung (20) mindestens eine erste Vakuumquelle (21) zur Bereitstellung eines Vakuums umfasst, und wobei die mindestens eine erste Vakuumquelle (21) über einen ersten Vakuumkanal (26) mit der mindestens einen Matrizenform (10) einer jeden Matrizenplatte (9, 9') zur Bereitstellung eines Vakuums zum Tiefziehen der Folie (2) verbindbar ist,
und mit mindestens einer Heizplatte (13) zur Erwärmung der Folie (2), wobei die Heizplatte (13) eine der Matrizenplatten (9, 9') abgewandte Oberseite (14) und eine der Matrizenplatte (9, 9') zugewandte Unterseite (15) aufweist,
und mit einer sich von der Unterseite (15) der Heizplatte (13) zur Oberseite (14) der Heizplatte (13) erstreckende Hochrichtung (32),
**dadurch kennzeichnet, dass** die Heizplatte (13) an der Unterseite (15) mindestens eine mit der Matrizenform (10) korrespondierende Formkontur (16) aufweist, wobei die Formkontur (16) derart ausgebildet ist, dass ein Folienabschnitt (17) der Folie (2), der zwischen der Formkontur (16) der Heizplatte (13) und der Matrizenform (10) liegt, lokal verschieden erwärmbar ist.

2. Tiefziehvorrichtung nach Anspruch 1,
**dadurch gekennzeichnet, dass** die Unterseite (15) der Heizplatte (13) eine ebene Basisfläche (18) aufweist, wobei die Formkontur (16) ausgehend von der Basisfläche (18) in Hochrichtung (32) zur Oberseite (14) der Heizplatte (13) hin eine Vertiefung (19) bildet.

3. Tiefziehvorrichtung nach Anspruch 2,
**dadurch gekennzeichnet, dass** die Basisfläche (18) bezüglich der Hochrichtung (32) vollständig unterhalb der Formkontur (16) liegt.

4. Tiefziehvorrichtung nach einem der Ansprüche 1 bis 3,
**dadurch gekennzeichnet, dass** Teile der Formkontur (16) als Freiformflächen (33) ausgebildet sind.

5. Tiefziehvorrichtung nach Anspruch 4,
**dadurch gekennzeichnet, dass** die Formkontur (16), insbesondere die Freiformflächen der Formkontur (16), bezogen auf die Basisfläche (18) eine Vielzahl verschiedener Tiefen (t) aufweist

6. Tiefziehvorrichtung nach einem der Ansprüche 1 bis 5,
**dadurch gekennzeichnet, dass** die Heizplatte (13) über eine Druckplatte (34) in Hochrichtung (32) auf- und abbewegbar ist.

7. Tiefziehvorrichtung nach einem der Ansprüche 1 bis 6,
**dadurch gekennzeichnet, dass** an der Formkontur (16) der Heizplatte (13) mindestens eine Kapillaröffnung (35) ausgebildet ist, wobei die mindestens eine Kapillaröffnung (35) über einen zweiten Vakuumkanal (28) mit einer ersten Vakuumquelle (21) und/oder einer zweiten Vakuumquelle (27) verbunden ist.

8. Verpackungsmaschine zur Herstellung von Folienverpackungen mit einer Tiefziehvorrichtung (12) nach einem der Ansprüche 1 bis 7.

9. Verfahren zum Tiefziehen von Folie zur Herstellung von Folienverpackungen mit einer Verpackungsmaschine nach Anspruch 8,
wobei mindestens einer Matrizenplatte (9, 9') eine Folie (2) zugeführt wird,
wobei die Folie (2) in dem Folienabschnitt (17) zwischen der Formkontur (16) der Heizplatte (13) und der Matrizenform (10) durch die Heizplatte (13) lokal verschieden erwärmt wird.

10. Verfahren nach Anspruch 9,
**dadurch gekennzeichnet, dass** zum Erwärmen der Folie (2) die Heizplatte (13) in Richtung der Matrizenplatte (9, 9') bis zum Erreichen eines Abstandes (a) zwischen der Matrizenplatte (9) und der Heizplatte (13) abgesenkt wird, wobei der Abstand (a) zur Regulierung des Wärmeübertrages auf die Folie (2) einstellbar ist.

11. Verfahren nach Anspruch 10,
**dadurch gekennzeichnet, dass** zur Vorstreckung der Folie (2) an der Formkontur (16) der Heizplatte (13) ein Vakuum angelegt wird, wodurch die Folie (2) von der Heizplatte (13) angesaugt wird und sich an der Formkontur (16) anlegt.

12. Verfahren nach einem der Ansprüche 9 bis 11,
**dadurch gekennzeichnet, dass** die Folie (2), insbesondere nach einer Vorstreckung, in die Matrizenform (10) der Matrizenplatte (9, 9') durch ein an der Matrizenform (10) anliegendes Vakuum tiefgezogen wird.

## Claims

1. Deep-drawing device for deep drawing a film,
comprising an arrangement of multiple die plates (9, 9') which is drivable by a conveyor (7) on a circulating path,
wherein each die plate (9, 9') has at least one mould (10),
and having at least one moulding-vacuum device (20), wherein the moulding-vacuum device (20) comprises at least one first vacuum source (21) for providing a vacuum, and wherein the at least one first vacuum source (21) can be connected via a first vacuum channel (26) to the at least one mould (10) of each die plate (9, 9') to provide a vacuum for deep drawing the film (2),
and having at least one hotplate (13) for heating the film (2), wherein the hotplate (13) has a top side (14) facing away from the die plates (9, 9') and a bottom side (15) facing towards the die plate (9, 9'),
and having a vertical direction (32) extending from the bottom side (15) of the hotplate (13) to the top side (14) of the hotplate (13),
**characterized in that** the bottom side (15) of the hotplate (13) has at least one shaping contour (16) corresponding to the mould (10), wherein the shaping contour (16) is designed such that a film portion (17) of the film (2) that lies between the shaping contour (16) of the hotplate (13) and the mould (10) can be locally differently heated.

2. Deep-drawing device according to Claim 1,
**characterized in that** the bottom side (15) of the hotplate (13) has a flat base area (18), wherein the shaping contour (16) forms a depression (19) from the base area (18) in the vertical direction (32) to the top side (14) of the hotplate (13).

3. Deep-drawing device according to Claim 2,
**characterized in that** the base area (18) lies completely underneath the shaping contour (16) with respect to the vertical direction (32).

4. Deep-drawing device according to one of Claims 1 to 3,
**characterized in that** parts of the shaping contour (16) are designed as free-form surfaces (33).

5. Deep-drawing device according to Claim 4,
**characterized in that** the shaping contour (16), in particular the free-form surfaces of the shaping contour (16), has a multiplicity of different depths (t) with respect to the base area (18).

6. Deep-drawing device according to one of Claims 1 to 5,
**characterized in that** the hotplate (13) can be moved up and down in the vertical direction (32) above a pressure plate (34).

7. Deep-drawing device according to one of Claims 1 to 6,
**characterized in that** at least one capillary opening (35) is formed on the shaping contour (16) of the hotplate (13), wherein the at least one capillary opening (35) is connected to a first vacuum source (21) and/or a second vacuum source (27) via a second vacuum channel (28).

8. Packaging machine for producing film packaging, comprising a deep-drawing device (12) according to one of Claims 1 to 7.

9. Method for deep drawing film for producing film packaging with a packaging machine according to Claim 8,
wherein a film (2) is fed to at least one die plate (9, 9'), wherein the film (2) is locally differently heated in the film portion (17) between the shaping contour (16) of the hotplate (13) and the mould (10) by the hotplate (13).

10. Method according to Claim 9,
**characterized in that,** to heat the film (2), the hotplate (13) is lowered in the direction towards the die plate (9, 9') until a distance (a) between the die plate (9) and the hotplate (13) is reached, wherein the distance (a) can be adjusted to regulate the transfer of heat to the film (2).

11. Method according to Claim 10,
**characterized in that,** to pre-stretch the film (2), a vacuum is applied to the shaping contour (16) of the hotplate (13), as a result of which the film (2) is drawn in by the hotplate (13) and lies against the shaping contour (16).

12. Method according to one of Claims 9 to 11,
**characterized in that** the film (2), in particular after pre-stretching, is deep drawn into the mould (10) of the die plate (9, 9') by a vacuum that is applied to the mould (10).

## Revendications

1. Dispositif d'emboutissage pour l'emboutissage de film,
comprenant un agencement de plusieurs plaques de matrice (9, 9') qui peut être entraîné dans une voie de circulation par un transporteur (7),
chaque plaque de matrice (9, 9') présentant au moins un moule de matrice (10), et avec au moins un appareil de vide de moule (20), l'appareil de vide de moule (20) comprenant au moins une première source de vide (21) pour fournir un vide, et l'au moins une première source de vide (21) pouvant être reliée par l'intermédiaire d'un premier canal de vide (26) à l'au moins un moule de matrice (10) de chaque plaque de matrice (9, 9') pour fournir un vide pour l'emboutissage du film (2),
et avec au moins une plaque chauffante (13) pour chauffer le film (2), la plaque chauffante (13) présentant un côté supérieur (14) détourné des plaques de matrice (9, 9') et un côté inférieur (15) tourné vers la plaque de matrice (9, 9'), et avec une direction verticale (32) s'étendant depuis le côté inférieur (15) de la plaque chauffante (13) jusqu'au côté supérieur (14) de la plaque chauffante (13),
**caractérisé en ce que** la plaque chauffante (13) présente sur le côté inférieur (15) au moins un contour de moule (16) correspondant au moule de matrice (10), le contour de moule (16) étant conçu de telle sorte qu'une section de film (17) du film (2), qui se trouve entre le contour de moule (16) de la plaque chauffante (13) et le moule de matrice (10), peut être chauffée localement de manière différente.

2. Dispositif d'emboutissage selon la revendication 1,
**caractérisé en ce que** le côté inférieur (15) de la plaque chauffante (13) présente une surface de base plane (18), le contour de moule (16) formant un creux (19) en partant de la surface de base (18) dans la direction verticale (32) vers le côté supérieur (14) de la plaque chauffante (13).

3. Dispositif d'emboutissage selon la revendication 2,
**caractérisé en ce que** la surface de base (18) se situe complètement en dessous du contour de moule (16) par rapport à la direction verticale (32).

4. Dispositif d'emboutissage selon l'une quelconque des revendications 1 à 3,
**caractérisé en ce que** des parties du contour de moule (16) sont réalisées sous forme de surfaces de forme libre (33).

5. Dispositif d'emboutissage selon la revendication 4,
**caractérisé en ce que** le contour de moule (16), notamment les surfaces de forme libre du contour de moule (16), présente une pluralité de profondeurs (t) différentes par rapport à la surface de base (18).

6. Dispositif d'emboutissage selon l'une quelconque des revendications 1 à 5,
**caractérisé en ce que** la plaque chauffante (13) peut être déplacée vers le haut et vers le bas dans la direction verticale (32) par l'intermédiaire d'une plaque de pression (34).

7. Dispositif d'emboutissage selon l'une quelconque des revendications 1 à 6,
**caractérisé en ce qu'**au moins une ouverture capillaire (35) est réalisée sur le contour de moule (16) de la plaque chauffante (13), l'au moins une ouverture capillaire (35) étant reliée à une première source de vide (21) et/ou à une deuxième source de vide (27) par l'intermédiaire d'un deuxième canal de vide (28).

8. Machine d'emballage pour la fabrication d'emballages en film avec un dispositif d'emboutissage (12) selon l'une quelconque des revendications 1 à 7.

9. Procédé d'emboutissage de film pour la fabrication d'emballages en film avec une machine d'emballage selon la revendication 8,
un film (2) étant amené à au moins une plaque de matrice (9, 9'), le film (2) étant chauffé localement de manière différente par la plaque chauffante (13) dans la section de film (17) entre le contour de moule (16) de la plaque chauffante (13) et le moule de matrice (10).

10. Procédé selon la revendication 9,
**caractérisé en ce que,** pour chauffer le film (2), la plaque chauffante (13) est abaissée en direction de la plaque de matrice (9, 9') jusqu'à atteindre une distance (a) entre la plaque de matrice (9) et la plaque chauffante (13), la distance (a) étant réglable pour réguler le transfert de chaleur au film (2).

11. Procédé selon la revendication 10,
**caractérisé en ce que,** pour préétirer le film (2), un vide est appliqué sur le contour de moule (16) de la plaque chauffante (13), moyennant quoi le film (2) est aspiré par la plaque chauffante (13) et s'applique sur le contour de moule (16).

12. Procédé selon l'une quelconque des revendications 9 à 11,
**caractérisé en ce que** le film (2), notamment après un pré-étirage, est embouti dans le moule de matrice (10) de la plaque de matrice (9, 9') par un vide appliqué au moule de matrice (10).
